Europäisches Patentamt

European Patent Office

Office européen des brevets

(11) Publication number: **0 055 312**
A2

(12) # EUROPEAN PATENT APPLICATION

(21) Application number: 80304759.6

(22) Date of filing: 30.12.80

(51) Int. Cl.³: **G 01 F 23/06**

(43) Date of publication of application:
07.07.82 Bulletin 82/27

(84) Designated Contracting States:
DE FR GB IT SE

(71) Applicant: NIPPON MEKTRON, LTD.
12-15, 1-Chome Shiba Daimon
Minato-KU Tokyo(JP)

(72) Inventor: Tanaka, Yasuyuki
531-203 Taku, Ushiku-Machi
Inashiki-Gun, Ibaraki Pref 30012(JP)

(74) Representative: Jones, Colin et al,
W.P. THOMPSON & CO. Coopers Building Church Street
Liverpool L1 3AB(GB)

(54) Resistance body of vertically set fuel gauge and support structure thereof.

(57) There is provided an external casing vertically arranged in a fuel tank of vehicles or like, in order to detect a linear electric signal of change in the height of fuel surface in the fuel tank and a slender metallic resistance body (10) is set along the axial line of an external casing (3). The resistance body (10) has a resistance circuit pattern (10A, 16, 26) formed at least at one surface thereof through the interposition of an electric insulating layer (15, 24), the resistance circuit pattern (10A, 16, 26) having a shape corresponding to that of the fuel tank. The lower end of the resistance body (10) is caused to project from the bottom of the external casing (3) so that the resistance body can be arranged vertically while being pulled in the direction of bottom of the external casing by means of a metal fitting (12, 13) provided at the projecting portion of resistance body.

FIG.3

-1-

DESCRIPTION

Resistance Body of Vertically Set Fuel
Gauge and Support Structure Thereof

## Background of the Invention:

(1) Field of the Invention:

This invention relates to a fuel gauge for use in vehicles and more particularly, to a resistance body of a vertically set fuel gauge and a support structure thereof.

(2) Description of the Prior Art:

For measuring the amount of fuel remaining in a tank of vehicles such as automobiles or the like, the conventional method consists mainly in using a float adapted to move up and down according to a change in the height of fuel surface, converting the displacement of the float to a circular motion of an electric contact point at the end of an arm connected to the float, taking out the change in the height of fuel surface as an electric signal of said contact point sliding in a coil resistance body, thereby permitting said electric signal to indicate the remaining amount of fuel by means of a bimetal or coil-type receiver unit.

Accordingly, such conventional method has several drawbacks such as an unsatisfactory accuracy of the coil resistance body itself, a short range of sliding movement, low degree of absolute accuracy for the displacement of fuel surface. Moreover, since the float is connected to one end of said arm, an ample spacing is required for installation of the fuel gauge, and when the fuel tank is of a transformed shape, there occurs no linear change in resistance value for the remaining amount of fuel.

As means for overcoming such drawbacks, various kinds of vertically set fuel gauge have been proposed in recent years. The structure of such a vertically set fuel gauge consists of an upper lid attached to a fuel tank, a fuel suction pipe either or not piercing the lid for communication with the inside of the fuel tank, a metal for installing a terminal and a resistance body in a direction vertical to fuel surface in the fuel tank. In this case, the resistance body is formed of an aluminum base plate having its surface treated by anodic oxidation or a base plate of paper impregnated with phenol resin having a conductive metal foil of high specific resistance applied either to one surface or both surfaces thereof, thus forming a suitable resistance pattern by etching. Around this resistance body are provided a float adapted to move up and down following a change in the height of fuel surface, a contact member attached to the float and adapted to contact the resistance body for detecting a change in resistance value, an external casing designed to protect said elements and formed with orifices for damping a sudden change in the height of fuel surface and a bottom plate for holding at least the lower end of the resistance body of the structural members of the fuel gauge at the bottom of the external casing. In this case, it is in common with the conventional method that an electric signal as a change in resistance value is transmitted to a direct read-out meter or differential coil-type meter to indicate the amount of fuel in an analog or manual manner, and said electric signal is treated by A-D conversion to indicate the amount of fuel in a digital manner. Particularly, however, the resistance body is easily formed with a resistance pattern by etching or similar treatment whereby it is rendered possible to enhance absolute accuracy of the resistance pattern in a simple manner and to make the resistance pattern conform to a transformed shape of the fuel tank, thus ensuring a linear relationship between the amount of fuel and resistance pattern and moreover, since the resistance body can be provided in slender form, it is easy to enhance a decomposed function of change in the height of fuel surface and besides, owing to the action of orifices of the external casing, it is also possible to prevent an abrupt change in the height of fuel surface which may arise from swinging movement of the vehicle. Consequently, it is possible to apply a system of high accuracy to an indication meter, which is characteristic of vertically arranged fuel gauges of this kind.

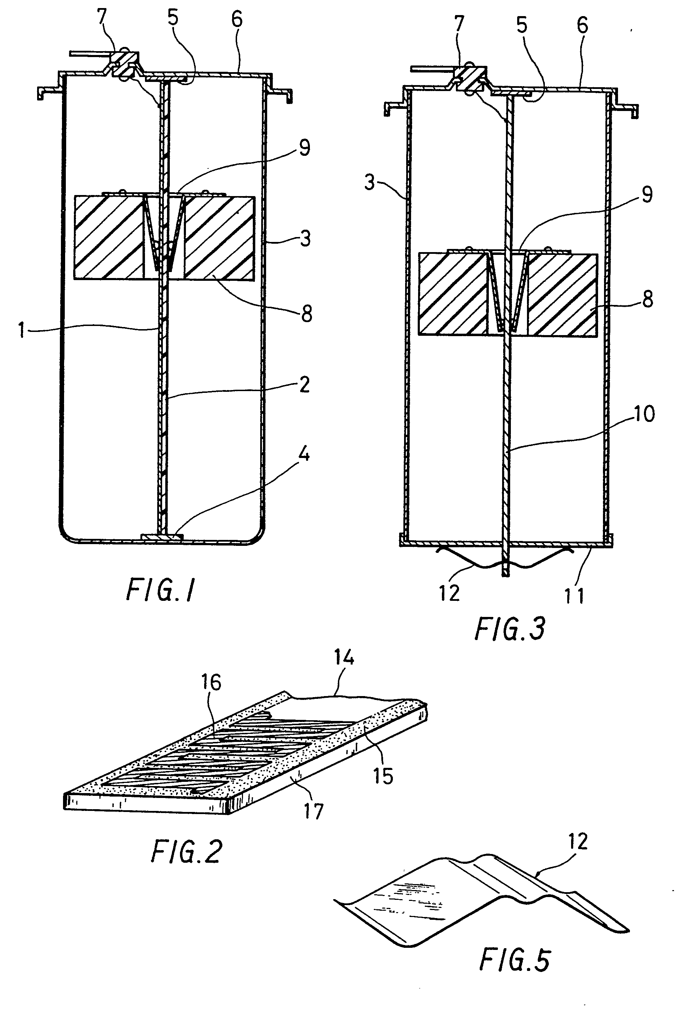

As is apparent from all the aforegoing, this kind of fuel gauge can ensure appreciably high accuracy for indicating fuel amount in the fuel tank, as compared with the conventional method but there still remains the following problem as shown in Fig. 1 of the accompanying drawings, namely, the resistance body 1 is provided, for example, with a reinforcing plate 2 in the back surface and the lower end of the plate 2 is fixed by means of a metal fitting 4 either at the internal bottom of the external casing 3 or at the other bottom thereof. Here, numeral 5 designates a metal fitting for securing the upper end of the resistance body or reinforcing plate 2 to the inside of the upper lid 6, numeral 7 designates a terminal attached to said upper lid 6 for communication of the resistance body and an outside indicator meter ( not shown ), and numerals 8 and 9 designate a float and a contact member respectively. In this way, since the resistance body is arranged vertically in the external casing 3 through the upper lid 6, the arrangements require such operation as screw-fixing of the upper and lower ends of the resistance body 1, metal fittings 4 and 5, rivet-checking or fastening in combination with a number of parts provided in the external casing 3 for purposes of positioning the resistance body so that the assembling operation will become so much complicated thus largely disturbing the efficiency of such operations in all.

Also as shown in Fig. 2, when using a metal plate of aluminum or the like as the base material for the resistance body 14, at least one surface thereof is provided with a coating 15 treated by anodic oxidation for insulating purposes and the required pattern 16 is fixed onto the surface of said coating. Generally speaking, however, when manufacturing a resistance body 14, it is common that a large size base material is subjected to the aforesaid insulating treatment and a large number of resistance patterns 16 are formed at a time and finally cut to the required shape. Thus, the aluminum material as the base will be exposed at its lateral cut-off surfaces. Therefore, if the resistance body 14 under such condition is incorporated in a vertically set fuel gauge, the lateral surfaces 17 of the material directly exposed are liable to be eroded by organic acids or water contained in fuel such as gasoline and simultaneously, there occurs the promotion of galvanic corrosion between the resistance pattern 16 and the base material with the result that the resistance pattern or base is impaired rapidly in terms of a factor for losing its reliability.

Summary of the Invention:

One object of the present invention is to provide a resistance body for use in a vertically set fuel gauge and a support structure thereof, quite new and much improved over the prior art by eliminating all aforesaid problems and drawbacks involved in the conventional fuel measurement as explained hereinbefore.

According to the present invention which relates to a vertically set fuel gauge wherein there are provided a float movable up and down following a change in the height of fuel surface in a fuel tank and a contact member attached to said float for detecting a change in the height of fuel surface as an electric signal of resistance change while the contact member is held in contact with the resistance. Under such circumstances, it is possible to provide a resistance body of a vertically set fuel gauge which is characterized by the fact that the base material of the resistance body is formed of a metal plate which can become insulated by an insulating treatment.

At the same time, according to the present invention, it is possible to provide such a support structure of the resistance body arranged in a vertically set fuel gauge as is capable of holding the upper end of the resistance body at an upper lid of the fuel gauge, permitting the lower end of the resistance body to project from the bottom of an external casing for the fuel gauge and fixing said lower end outside the bottom of said external casing.

In a preferred embodiment of the present invention, said resistance body consists of an aluminum plate having one surface thereof treated by anodic oxidation to become insulated, said insulation treated surface being formed with a resistance circuit pattern necessary for detecting a change in the height of fuel surface. When constituting this type of resistance body, it is also possible to provide insulating layers on both surfaces of an aluminum plate as a base material and to form said resistance circuit pattern on one of said insulating layers and an earth circuit pattern on the other surface respectively. From the viepoint of improving the durability of said resistance body, it is desirable to coat both lateral surfaces of said aluminum plate with an insulating protection film.

According to another preferred embodiment of the present invention, it is possible to obtain a structure of resistance body using a stainless steel plate or iron plate as the base material for the resistance body, in order to ensure mechanical strength of the resistance body, at a satisfactory level, thereby forming the required circuit pattern on one surface thereof after insulating treatment and utilizing the other surface thereof for an earth circuit as it is. Since this type of resistance body ensures high mechanical strength by itself, it becomes possible to make its thickness preferably small so that said possibility will contribute very much to compactness of a vertically set fuel gauge.

By using the resistance body of the vertically set fuel gauge and its support structure as aforesaid, it is possible not only to facilitate an assembling operation for this type of fuel gauge, but also to enhance compactness and durability of the fuel gauge as well as to produce more accuracy in measuring the height of fuel surface.

With reference to the accompanying drawings wherein like numerals designate like parts throughout, the present invention will be better understood by those skilled in the art and the objects and advantages of the present invention will become apparent.

Brief Description of the Drawings:

Fig. 1 is a conceptual view in cross section of a condition for installation of a resistance body in the usual vertical fuel gauge of prior art;

Fig. 2 is a partial perspective of a resistance body of prior art for use in a vertically set fuel gauge;

Fig. 3 is a conceptual view in cross section of a condition for installation of a resistance body in a vertically set fuel gauge of the present invention, in a manner similar to Fig. 1;

Fig. 4 is a partial perspective view of the resistance body of the present invention;

Fig. 5 is a perspective view of a plate spring for use in a fixing operation, corresponding to Fig. 4;

Fig. 6 is a partial perspective view of another resistance body for use in the present invention;.

Fig. 7 is a view of outline of a fixing pin of the same kind as that shown in Fig. 6;

Fig. 8 is an enlarged conceptual view in cross section showing still another resistance body for use in the vertically set fuel gauge of the present invention;

Figs. 9 and 10 are enlarged views in cross section of a resistance body of prior art; and

Fig. 11 is an enlarged conceptual view in cross section of still another resistance body according to the present invention.

Detailed Description of the Invention:

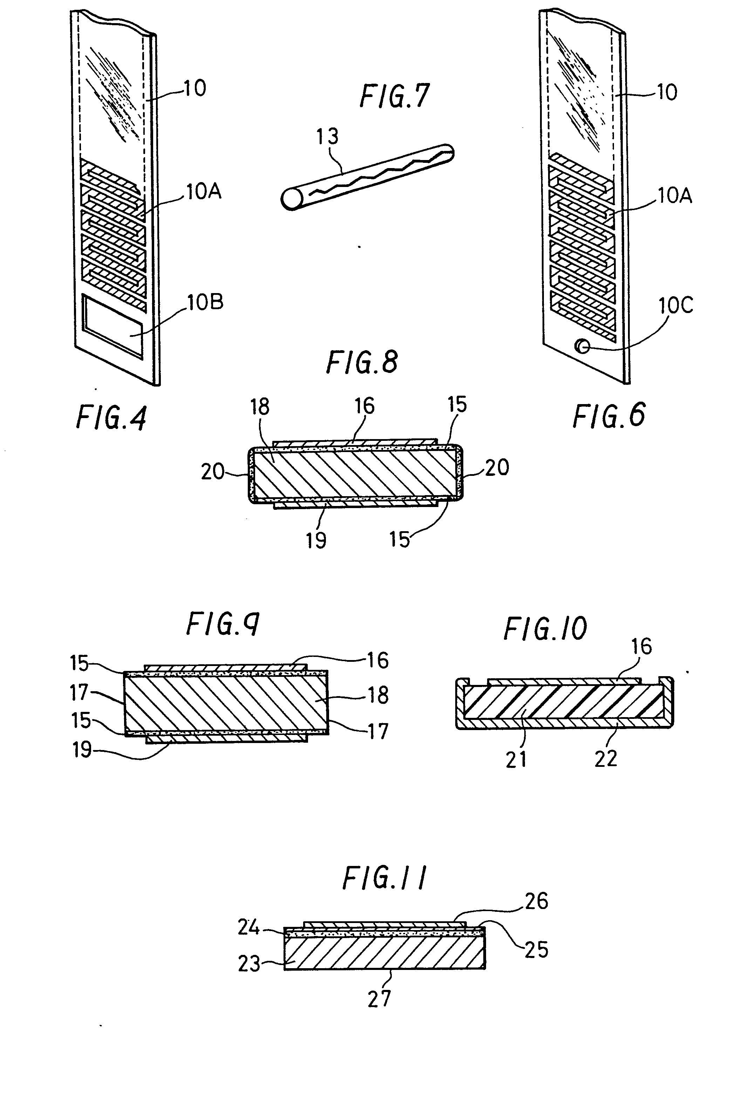

With respect to the resistance body and its support structure described in the preferred embodiments of the present invention, as shown in Fig. 3, the resistance body 10 is formed of a metal base such as an aluminum plate, stainless steel plate or iron plate, and after the metal base is subjected to a surface-insulating treatment, the required resistance pattern is provided on said insulated surface thereby simplifying the parts of said resistance body 10 itself on one hand, and on the other hand, the lower end of said resistance body 10 is caused to project outwardly from the bottom integral with the external casing 3 or from a bottom separately formed, and then said projecting portion is supported at the bottom 11 of the external casing, for example, by means of a plate spring 12. Here, like numerals in Fig. 1 designate like parts of the same structure in Fig. 3. As described above, in case such structure is constituted as the lower end of the resistance body 10 is caused to project outwardly from the bottom 11 of the external casing, first of all, the upper end of the resistance body together with an external terminal 7 is secured to an upper lid suitably by means of a metal fitting 5 and subsequently, a float with a contact point 29 attached is inserted onto said resistance body and the lower end of the resistance body 10 has only to be adapted to project outwardly from the bottom 11 of the external casing in such a manner as the resistance body under inserted condition can be arranged in the external casing 3, and lastly, as shown in Fig. 4, the plate spring 12 is secured to the bottom 11 of the external casing while inserting it in the hole 10B formed in the lower end of the resistance body 10, thus finishing the fixing and assembling operation of the resistance body in a simple manner. Again as shown in Fig. 4, it is possible to form the resistance pattern 10A for attachment to the resistance body 10 up to its portion corresponding to the position of the bottom 11 of the external casing. At the same time, the angular hole 10B for insertion of the plate spring 12 can be previously formed so as to be positioned at the end portion of the resistance body. As means for supporting the lower end of the resistance body 10, besides that already mentioned above, a round hole 10C may be formed at the lower end of the resistance body, as shown in Fig. 6 and Fig. 7 so that the resistance body can be secured to the bottom of the external casing by means of a pin 13 for engagement with said round hole 10C. As both said means serve to fix the resistance body 10 by an almost one-touch operation, the labor of assembling the fuel gauge may be reduced to a large extent. Moreover, the resistance body 10 of sufficient strength is secured in place in such a manner as its lower end is pulled outwardly from outside the bottom of the external casing so that backlash of the resistance body 10 after the assembling operation or its loosening tendency due to outer vibrations can be eliminated satisfactorily, thereby contributing very much to improvements in measuring accuracy.

According to the aforesaid preferred embodiments, the assembling operation of the resistance body in a vertically set fuel gauge can be carried out at the same time with other parts so that the present invention is well suited to improvements in the assembling operation as well as to enhancement of accuracy to a large extent along with the small number of parts for use in the fuel gauge, this ensuring extremely high practicability.

With respect to the resistance body shown in Fig. 4 and Fig. 6 illustrative of another preferred embodiment, wherein an aluminum plate is used for the material of the resistance body, as shown in Fig. 8, it is characterized by a structure that an electric insulating protection film 20 is provided at the lateral surfaces of a metal base 18 such as an aluminum plate, and in this case, like numerals in Fig. 8 designate like parts in Fig. 2. Namely, numeral 18 indicates a metal base such as an aluminum plate and numeral 19 a pattern as an earth circuit as it is in the back surface of the resistance body. A protection film 20 to be formed at both lateral surfaces of the resistance body can be formed of a base treated by anodic oxidation in cases where a film of resin is intended or an aluminum plate is used as a base material. Consequently, the metal base 18 is perfectly insulated and coated with an oxidized insulating film 15 and the protection film 20 formed at the lateral surfaces over the whole circumference so that it becomes possible to prevent the corrosion of the metal base due to organic acids or water in fuel and the occurrence of galvanic corrosion, thus enhancing the reliability of the resistance body over long periods of time in use.

With respect to the resistance body of this preferred embodiment, when it is formed of a base material such as an aluminum plate of mechanically high strength, not only the surface of the base material but also, especially, its lateral surfaces can be covered with an insulating protection film so that it becomes possible to enhance the durability of the resistance body remarkably thereby further improving the reliability of the vertically set fuel gauge itself.

In cases where the resistance body for detecting the displacement of fuel surface as an electric signal of a change in resistance value is to be formed of the base material of aluminum plate as shown in Figs. 2 and 9, a film 15 treated by anodic oxidation is formed on both surfaces of said base material and the resistance pattern 16 is attached to one surface thereof and an earth circuit 19 is attached to the other surface. However, in this case, there remain such drawbacks as aluminum material of no sufficient mechanical strength, the necessity of coating exposed lateral surfaces 17 with an insulating protection film from the viepoint of preventing corrosion of the resistance body and an electric contact and the necessity of applying the required patterns 16 and 19 to both surfaces of the base material 18 individually. Likewise, as shown in Fig. 10, in cases where such a resistance body is employed as its base material 21 formed of paper impregnated with phenol resin and the resistance pattern 16 is applied to one surface of the base material 21, a suitable reinforcing metal plate 22 is applied to the back surface of the resistance body with a view to supplementing its strength so that said plate 22 can serve as an earth circuit surface. But such resistance body tends to have a larger thickness and there occurs a drawback that a float and a contact member are difficult to constitute.

In still another preferred embodiment, as shown in Fig. 11, there is provided a base material 23 consisting of a stainless steel plate or iron plate of mechanically strength, and an insulating layer 24 is formed on one surface of said base material and the required resistance pattern is applied thereto through a binder 25 and then the other surface of the base material 23 is adapted to serve as an earth circuit surface 27 directly. In case the base material 23 is formed of a stainless steet plate, its surface corresponding to the earth circuit surface 27 has only to be finished like a mirror surface. If an iron plate is used in place of a stainless steet plate, its surface has only to be plated with chrominum of anti-erosive and wear-resisting properties. When using the base material 23 of such structure, it becomes unnecessary to protect the lateral surfaces of the base material and also a reinforcing metal plate is unnecessary, as compared with the condition shown in Fig. 9 and Fig. 10 so that it is possible to obtain all the assembly in a thin and simple structure. In this manner when making all the body of a resistance body of material of chemically high strength in a vertically set fuel gauge of the kind so as to be thin enough, it is possible to simplify the construction of a contact member and a float adapted to slide along said base material until several advantages can be ensured such as expectancy of compactness of the fuel gauge.

While the present invention has been explained in detail with reference to the preferred embodiments in the accompanying drawings, it is apparent that other various modifications and altenatives can be obtained without departing from the spirit of the appended claims of the present invention. Since all the aforegoing explanation is made only for illustrative purposes, it is also apparent that the present invention in not limited to said preferred embodiments.

0055312

## CLAIMS.

1. In a vertically set fuel gauge having a contact member attached to a float movable up and down following a change in the height of fuel surface, said contact member in contact with a resistance body being adapted to take out a change in fuel surface as an electric signal of a change in resistance value, a resistance body of a vertically set fuel gauge which comprises the base material of said resistance body being formed of a metal plate, at least one surface of said base material being subjected to an electric insulating treatment and a resistance circuit pattern being formed on said insulated surface.

2. A resistance body of a vertically set fuel gauge, as claimed in claim 1, which comprises the base material of said resistance body being formed of an aluminum plate treated by anodic oxidation and its longitudinal lateral surfaces being covered with an electrically insulating coating.

3. A resistance body of a vertically set fuel gauge, as claimed in claim 2, which comprises a protection coating made of an electrically insulating resin.

4. A resistance body of a vertically set fuel gauge, as claimed in claim 1, which comprises said resistance body being constituted in such a manner as one surface of said base material may serve as an earth circuit.

5. A resistance body of a vertically set fuel gauge, as claimed in claim 4, which comprises the base material of said resistance body being formed of a stainless steel plate and one surface of said base material being formed with an electrically insulating layer for installation of a resistance circuit pattern thereon.

6. A resistance body of a vertically set fuel gauge, as claimed in claim 5, which comprises said resistance body being constituted in such a manner as the other surface of said resistance body being finished like a mirror surface to serve as an earth circuit.

7. A resistance body of a vertically set fuel gauge, as claimed in claim 4, which comprises the base material of said resistance body being formed of an iron plate and one surface of said base material being formed with an electrically insulating layer for installation of a resistance circuit pattern thereon.

8. A resistance body of a vertically set fuel gauge, as claimed in claim 7, which comprises said resistance body being constituted in such a manner as said base material is subjected to an anti-corrosive treatment and said treated surface may serve as an earth circuit.

9. In a vertically set fuel gauge having a contact member attached to a float movable up and down following a change in the height of fuel surface, said contact member in contact with a resistance body being adapted to take out a change in the height of fuel surface as an electric signal of a change in resistance value, a support structure for said resistance body, which comprises the base material of said resistance body being formed of a metal plate to be electrically insulated, the upper end of said resistance body being held at an upper lid of the fuel gauge, the lower end thereof being caused to project outwardly from the bottom of an external casing for the fuel gauge and the lower end of said resistance body being fixed outwardly of said bottom of external casing.

10. A support structure for a resistance body, as claimed in claim 9, which comprises a rectangular hole being formed in the lower end of said resistance body projecting from said bottom of external casing, a plate spring inserted in said rectangular hole and having both ends in contact with the exterior of said bottom of external casing so that said resistance body can be fixed by means of said plate spring while vertically pulling said resistance body in the direction of said bottom of external casing.

11. A support structure for a resistance body, as claimed in claim 9, which comprises a round hole being formed in the lower end of said resistance body projecting from said bottom of external casing and a pin being inserted in said round hole so that said resistance body can be set while being pulled vertically in the direction of said bottom of external casing.

12. A support structure for a resistance body, as claimed in claim 11, which comprises said pin being a divisible pin either resilient or non-resilient.

FIG.1

FIG.3

FIG.2

FIG.5

FIG.4

FIG.7

FIG.8

FIG.6

FIG.9

FIG.10

FIG.11